# EUROPÄISCHE PATENTSCHRIFT

(11) **EP 3 067 468 B1**
(45) Veröffentlichungstag und Bekanntmachung des Hinweises auf die Patenterteilung: **17.01.2018**
(21) Anmeldenummer: 16158829.8
(22) Anmeldetag: 04.03.2016
(51) Int. Cl.: E01C 23/088, B60G 17/019

(54) **SELBSTFAHRENDE BAUMASCHINE UND VERFAHREN ZU DEREN BETREIBEN**
SELF-PROPELLED CONSTRUCTION VEHICLE AND METHOD FOR OPERATING THEREOF
ENGIN DE CONSTRUCTION AUTOMOTEUR ET PROCÉDÉ DE FONCTIONNEMENT DE CELUI-CI

(30) Priorität: 13.03.2015 DE 102015003153
(43) Veröffentlichungstag der Anmeldung: 14.09.2016
(73) Patentinhaber: Wirtgen GmbH, 53578 Windhagen (DE)
(72) Erfinder: Müller, René, 53560 Vettelschoß (DE); Winkels, Sebastian, 51570 Windeck (DE); Barimani, Cyrus, 53639 Königswinter (DE); Hähn, Günter, 53639 Königswinter (DE)
(74) Vertreter: Oppermann, Frank

(56) Entgegenhaltungen:
- EP-A1- 2 722 441

## Beschreibung

Die Erfindung betrifft eine selbstfahrende Baumaschine, insbesondere Straßenfräsmaschine, Recycler oder Surface-Miner, die über einen Maschinenrahmen verfügt, der von einem Fahrwerk getragen wird, das vordere und hintere Kettenlaufwerke oder Räder aufweist.

Die bekannten Baumaschinen verfügen über eine am Maschinenrahmen angeordnete Arbeitseinrichtung, die eine Arbeitswalze zur Bearbeitung des Bodens aufweist. Bei der Arbeitswalze kann es sich um eine Fräs- und/oder Schneidwalze handeln. Straßenfräsmaschinen beispielsweise weisen eine Fräswalze auf, mit der schadhafte Straßenbeläge abgefräst werden können.

Den einzelnen Kettenlaufwerken oder Rädern der Baumaschine sind Hubeinrichtungen zugeordnet, die gegenüber dem Maschinenrahmen jeweils ein- bzw. ausgefahren werden können, so dass der Maschinenrahmen zusammen mit der Arbeitseinrichtung gegenüber der Bodenoberfläche abgesenkt bzw. angehoben wird. Dadurch kann die Frästiefe bei einer Straßenfräsmaschine eingestellt werden. Zur Einstellung der Frästiefe weisen Straßenfräsmaschinen eine Steuereinheit auf, mit der die Hubeinrichtungen angesteuert werden, um das gewünschte Fräsprofil zu erhalten.

Während der Bearbeitung des Bodens wird angestrebt, dass der Maschinenrahmen zusammen mit der Arbeitseinrichtung gegenüber der Bodenoberfläche exakt ausgerichtet ist. Zur Einstellung der Frästiefe können die Hubeinrichtungen ein- bzw. ausgefahren werden. Während des Fräsbetriebs ist die Arbeitswalze der Arbeitseinrichtung mit dem Boden im Eingriff.

Die WO 2006/094795 A1 beschreibt eine Baumaschine, bei der die Hubeinrichtungen derart zwangsgekoppelt sind, dass das linke vordere Kettenlaufwerk und das rechte hintere Kettenlaufwerk in dieselbe Richtung und zu dem rechten vorderen Kettenlaufwerk und dem linken hinteren Kettenlaufwerk in entgegengesetzter Richtung höhenverstellbar sind. Dadurch wird die Quer- und Längsneigung der Baumaschine beim Überfahren von Hindernissen verringert und die Standsicherheit der Baumaschine erhöht.

Die WO 2008/077963 A1 beschreibt eine Straßenfräsmaschine, die eine Steuereinheit aufweist, mit der während des Fräsvorgangs die Hubeinrichtungen derart angesteuert werden, dass der Maschinenrahmen parallel zu der Bodenoberfläche ausgerichtet ist. Eine Straßenfräsmaschine mit einer Steuerung zur parallelen Ausrichtung des Maschinenrahmens gegenüber dem Boden während des Fräsvorgangs ist auch aus der US 2013/0162004 A1 bekannt.

Aus der EP 2 722 441 A1 ist eine Straßenfräsmaschine mit einer Steuereinheit für die Hubeinrichtungen zur Vermeidung von seitlichen Kippbewegungen der Baumaschine bekannt. Während des Fräsvorgangs ist die Steuereinheit aktiviert, so dass die Fräswalze für das gewünschte Fräsprofil exakt ausgerichtet ist.

Aufgrund der vorgegebenen Arbeitsbreite der Arbeitseinrichtung können größere Flächen mit den selbstfahrenden Baumaschinen nur abschnittsweise bearbeitet werden, so dass nach der Bearbeitung eines vorausgehenden Abschnitts das Umsetzen der Baumaschine zu dem nachfolgenden Abschnitt erforderlich ist. Weiterhin kann es erforderlich sein, die Baumaschine für den Transport zu einem neuen Einsatzort umzusetzen. Zur Bearbeitung des Bodens muss die Arbeitswalze mit dem Boden in Eingriff sein, während zum Umsetzen der Baumaschine die Arbeitswalze den Boden nicht berühren sollte, um Beschädigungen der Maschine oder eine unbeabsichtigte Bearbeitung des Bodens zu vermeiden. Beim Umsetzen der Baumaschine werden von den einzelnen Kettenlaufwerken oder Rädern Übergänge zwischen gefrästen und ungefrästen Geländeabschnitten überfahren. Wenn sprunghafte Übergänge überfahren werden müssen, kann der Maschinenrahmen stark zur Seite kippen.

Die EP 1 860 241 A2 beschreibt eine Steuerung für eine Straßenfräsmaschine, die nicht während des Fräsvorgangs der Baumaschine, sondern während des Umsetzens der Maschine aktiviert ist, um zu verhindern, dass die Fräswalze mit dem Boden in Eingriff kommt. Die Steuerung sieht eine Überwachung des Abstandes zwischen Fräswalze und Boden vor, um die Arbeitseinrichtung von der Antriebeinheit abzukoppeln und/oder die Hubeinrichtungen auszufahren, wenn ein Mindestabstand unterschritten wird.

Aus der US 2013/0166155 A1 ist auch eine Steuerung für den Betriebszustand der Baumaschine bekannt, bei der die Arbeitseinrichtung nicht in Betrieb ist. Diese Steuerung sieht die Einstellung von unterschiedlichen Positionen des Maschinenrahmens der Baumaschine vor. In einer der Positionen des Maschinenrahmens sollen sämtliche Hubeinrichtungen auf die gleiche Länge ausgefahren sein. Darüber hinaus soll auch der Maschinenrahmen in Bezug auf die Bodenoberfläche ausgerichtet werden können. Daher ist bei einer schrägen Bodenoberfläche auch der Maschinenrahmen schräg ausgerichtet.

Der Erfindung liegt die Aufgabe zugrunde, das Umsetzen der Baumaschine zu erleichtern sowie beim Umsetzen der Baumaschine einen besonders standsicheren Betrieb der Baumaschine zu gewährleisten und den Fahrkomfort für den Maschinenführer zu verbessern.

Die Lösung dieser Aufgabe erfolgt erfindungsgemäß mit den Merkmalen der unabhängigen Patentansprüche. Die abhängigen Ansprüche betreffen vorteilhafte Ausführungsformen der Erfindung.

Die erfindungsgemäße selbstfahrende Baumaschine, insbesondere Straßenfräsmaschine, Recycler oder Surface-Miner, verfügt über einen Maschinenrahmen, der von einen Fahrwerk getragen wird, das vordere und hintere Laufwerke aufweist, die Raupenketten oder Räder aufweisen können. Daher werden nachfolgend unter Laufwerken sowohl Kettenfahrwerke als auch Räder verstanden.

Am Maschinenrahmen ist eine Arbeitseinrichtung angeordnet, die eine Arbeitswalze zur Bearbeitung des Bodens aufweist. Die Arbeitswalze kann eine Fräs- und/oder Schneidwalze sein. Den einzelnen Laufwerken sind Hubeinrichtungen zugeordnet, die zum Anheben bzw. Absenken der Laufwerke gegenüber dem Maschinenrahmen jeweils ein- bzw. ausgefahren werden können. Dadurch wird der Maschinenrahmen gegenüber der Bodenfläche abgesenkt bzw. angehoben. Die Hubeinrichtungen können unterschiedlich ausgebildet sein. Beispielsweise können die Hubeinrichtungen Kolben-/ZylinderAnordnungen sein.

Zum Ansteuern der Hubeinrichtungen weist die erfindungsgemäße Baumaschine eine Steuereinheit auf, die Bestandteil der zentralen Steuerung der Baumaschine sein kann. Die Steuereinheit verfügt über eine Hubstellung-Messeinrichtung zur Erfassung der Hubstellung der Hubeinrichtungen und eine Neigungs-Erfassungseinrichtung zur Erfassung der Neigung des Maschinenrahmens quer zur Arbeitsrichtung der Baumaschine.

Die Steuereinheit der Baumaschine sieht einen ersten Betriebsmodus zum Bearbeiten des Bodens und einen zweiten Betriebsmodus zum Umsetzen der Baumaschine vor. In dem ersten Betriebsmodus befindet sich der Maschinenrahmen in einer in Bezug auf die Bodenoberfläche abgesenkten Position, so dass die Arbeitswalze zur Bearbeitung des Bodens mit dem Boden in Eingriff ist, während in dem zweiten Betriebsmodus sich der Maschinenrahmen in einer in Bezug auf die Bodenoberfläche angehobenen Position befindet, in der die Arbeitswalze nicht mit dem Boden in Eingriff ist. Unter dem Umsetzen der Baumaschine wird in diesem Zusammenhang jeder Vorgang des Verfahrens der Baumaschine verstanden, bei dem die Arbeitseinrichtung nicht mit dem Boden in Eingriff gebracht werden soll, d. h. auch das Verladen der Baumaschine für den Transport oder die Fahrt der Baumaschine zu einem anderen Einsatzort. Während des Umsetzens kann die Arbeitseinrichtung aber im Betrieb bleiben, d. h. die Fräswalze kann noch rotieren, um unnötige Startvorgänge zu vermeiden.

Die Steuereinheit der erfindungsgemäßen Baumaschine zeichnet sich dadurch aus, dass die den einzelnen Laufwerken zugeordneten Hubeinrichtungen derart angesteuert werden, dass in Abhängigkeit von der erfassten Neigung des Maschinenrahmens quer zur Arbeitsrichtung der Baumaschine und der erfassten Hubstellung der Hubeinrichtungen der Maschinenrahmen quer zur Arbeitsrichtung der Baumaschine im Wesentlichen waagerecht ausgerichtet ist. Mit der waagerechten Ausrichtung des Maschinenrahmens auch bei einem unterschiedlichen Höhenniveau der Aufstandsflächen der Laufwerke wird nicht nur der Fahrkomfort für den Maschinenführer, sondern auch die Standsicherheit der Baumaschine verbessert. Darüber hinaus wird der Maschinenführer von der Steuerung der Maschine entlastet.

Die erfindungsgemäße Steuerung ist insbesondere bei einer Straßenfräsmaschine von Vorteil, mit der ein Straßenbelag abschnittsweise abgefräst wird. Die erfindungsgemäße Steuerung verhindert automatisch starke Kippbewegungen der Baumaschine beim Umsetzen, ohne manuelle Eingriffe des Maschinenführers. Damit kann sich der Maschinenführer auf die anderen Aufgaben konzentrieren, insbesondere die Beobachtung des weit ausladenden Förderbandes der Fräsmaschine und der an der Baustelle vorbeifahrenden Fahrzeuge.

Die erfindungsgemäße Steuerung kann leicht in die bestehende zentrale Steuerung einer Baumaschine implementiert werden, die im Allgemeinen bereits Hubstellung-Messsysteme zur Erfassung der Hubstellung der Hubsäulen und Neigungs-Erfassungssysteme umfasst.

Für die Erfindung ist wesentlich, dass die Neigung des Maschinenrahmens quer zur Arbeitsrichtung der Baumaschine überwacht wird, um das oder die entsprechenden Laufwerke anzuheben bzw. abzusenken, so dass der Maschinenrahmen quer zur Arbeitsrichtung waagerecht ausgerichtet wird. In der Praxis ist für die Verbesserung des Fahrkomforts und der Standsicherheit die waagerechte Ausrichtung in Querrichtung von größerer Bedeutung als in Längsrichtung, d. h. in Arbeitsrichtung. Von Vorteil ist jedoch, wenn der Maschinenrahmen nicht nur in Querrichtung, sondern auch in Längsrichtung waagerecht ausgerichtet ist.

Die waagerechte Ausrichtung des Maschinenrahmens unterscheidet sich von der Ausrichtung des Maschinenrahmens parallel zur Bodenoberfläche. Von Vorteil ist, dass die waagerechte Ausrichtung des Maschinenrahmens unabhängig von der Beschaffenheit der Bodenoberfläche erfolgen kann. Daher können weder die Neigung der Bodenoberfläche noch Unebenheiten oder unterschiedliche Höhenniveaus, beispielsweise aufgrund bereits vorhandener Frässpuren, die Ausrichtung des Maschinenrahmens beeinflussen.

Die selbstfahrende Baumaschine kann ein in Arbeitsrichtung vorderes linkes Laufwerk und ein vorderes rechtes Laufwerk und ein hinteres linkes Laufwerk und ein hinteres rechtes Laufwerk und eine in Arbeitsrichtung vordere, linke und rechte Hubeinrichtung und eine hintere, rechte und linke Hubeinrichtung aufweisen, so dass sich der Maschinenrahmen exakt ausrichten lässt. Die bekannten Großfräsen verfügen im Allgemeinen über ein derartiges Fahrwerk.

Es ist aber auch möglich, dass die Baumaschine in Arbeitsrichtung nur ein vorderes Laufwerk, das höhenverstellbar sein kann, und ein hinteres linkes und rechtes, höhenverstellbares Laufwerk aufweist. Anstelle von einem vorderen Laufwerk können auch zwei vordere Laufwerke vorgesehen sein, die pendelnd gelagert sind und einen gemeinsamen vorderen Aufstandspunkt bilden. Diese Ausführungsform findet vor allem bei Kleinfräsen Anwendung, bei denen die Arbeitswalze zwischen den hinteren Laufwerken angeordnet ist und die exakte Einstellung der Frästiefe lediglich durch Steuerung der Hubposition der hinteren Laufwerke erfolgen kann. Die erfindungsgemäße Steuerung kann aber auch bei Baumaschinen Anwendung finden, die zwei vordere und ein hinteres Laufwerk aufweisen.

In dem zweiten Betriebsmodus kann der Maschinenrahmen beispielsweise mit der folgenden Ansteuerung der Hubeinrichtungen waagerechtet ausgerichtet werden. Wenn beispielsweise ein in Arbeitsrichtung linkes Laufwerk eine Bodenunebenheit überfährt, wird zur horizontalen Ausrichtung des Maschinenrahmens die dem gegenüberliegenden, rechten Laufwerk zugeordnete Hubeinrichtung ausgefahren, und wenn ein in Arbeitsrichtung rechtes Laufwerk eine Bodenunebenheit überfährt, wird die dem gegenüberliegenden, linken Laufwerk zugeordnete Hubeinrichtung ausgefahren.

Die erfindungsgemäße Ansteuerung der Hubeinrichtungen unterscheidet sich von einer Zwangskopplung der Hubeinrichtungen, die beispielsweise aus der WO 2006/094795 A1 bekannt ist. Bei der einfachen Pendelachse mit zwei zwangsgekoppelten Fahrwerken beispielsweise wird die Höhenänderung auf die beteiligten Hubsäulen "verteilt", d. h. wenn die linke Hubsäule eine Unebenheit überfährt, dann wird die linke Hubsäule eingefahren und die rechte Hubsäule um denselben Betrag ausgefahren. Folglich verringert sich der Abstand des Maschinenrahmens zur Bodenoberfläche zwangsläufig auf der linken Seite. Bei der erfindungsgemäßen Ansteuerung der Hubeinrichtungen hingegen bleibt der Abstand zwischen Maschinenrahmen und Boden auf der linken Seite gleich und vergrößert sich lediglich auf der rechten Seite. Die Pendelachse kann die Baumaschine nur dann in der Waagerechten halten, wenn die Maschine zuvor waagerechte ausgerichtet worden ist. Wird die Pendelachse aktiviert, wenn die Maschine geneigt ist, dann behält sie diese Neigung auch beim Überfahren von Unebenheiten bei.

Für die Vorgabe von dem ersten und zweiten Betriebsmodus bzw. die Umschaltung zwischen beiden Betriebsmodi ist vorzugsweise eine Eingabeeinheit vorgesehen, die unterschiedlich ausgebildet und am Fahrstand angeordnet sein kann, beispielsweise ein Bedienfeld mit Tastern oder Schaltern umfassen kann.

Eine besonders bevorzugte Ausführungsform sieht vor, dass die Steuereinheit in dem zweiten Betriebsmodus derart konfiguriert ist, dass die den einzelnen Laufwerken zugeordneten Hubeinrichtungen derart angesteuert werden, dass mindestens eine Hubeinrichtung eine vorgegebene Hubstellung einnimmt, in der die Hubeinrichtung um eine vorgegebene Wegstrecke ausgefahren ist. Die vorgegebene Hubstellung der mindestens einen Hubeinrichtung ist vorzugsweise eine Hubstellung, in der die Hubeinrichtung vollständig oder nahezu vollständig ausgefahren ist. Dadurch wird sichergestellt, dass der Abstand zwischen der Unterkante der Arbeitswalze und der Bodenoberfläche maximal ist, so dass ein Aufsetzen der Arbeitswalze auf den Boden ausgeschlossen ist. Es ist aber auch möglich, eine Position unterhalb der oberen Endposition der Hubeinrichtung vorzugegeben.

Die Neigungs-Erfassungseinrichtung weist mindestens einen am Maschinenrahmen angeordneten Neigungssensor auf. Zur Erfassung der Querneigung genügt ein in Querrichtung am Maschinenrahmen angeordneter Neigungssensor. Für die Erfassung der Quer- und Längsneigung können am Maschinenrahmen ein Neigungssensor in Querrichtung und ein Neigungssensor in Längsrichtung angeordnet oder ein einziger sowohl die Quer- als auch Längsneigung erfassender Sensor vorgesehen sein. Es können auch mehre Neigungssensoren an unterschiedlichen Referenzpunkten des Maschinenrahmens vorgesehen sein, wobei aus den Messwerten der einzelnen Sensoren ein Mittelwert gebildet wird.

Die Steuereinheit ist vorzugsweise derart konfiguriert, dass nach dem Umschalten von dem ersten Betriebsmodus in den zweiten Betriebsmodus und vor dem Umsetzen der Baumaschine zunächst mindestens eine Hubeinrichtung, die auf der in Arbeitsrichtung linken Seite angeordnet ist oder mindestens eine Hubeinrichtung, die auf der in Arbeitsrichtung rechten Seite der Baumaschine angeordnet ist, d. h. die betreffende Hubeinrichtung, die der Neigung entgegenwirkt, solange ausgefahren wird, bis der Maschinenrahmen quer zur Arbeitsrichtung im Wesentlichen waagrecht ausgerichtet ist. Bei einer Baumaschine mit zwei vorderen und hinteren Laufwerken werden vorzugsweise sowohl das betreffende vordere als auch hintere Laufwerk ausgefahren. Erst wenn der Maschinenrahmen waagerecht ausgerichtet ist, werden sämtliche Hubeinrichtungen solange ausgefahren werden, bis eine der Hubeinrichtungen die vorgegebene Hubstellung einnimmt, d. h. im Allgemeinen diejenige Hubeinrichtung, die von sämtlichen Hubeinrichtungen zur waagrechten Ausrichtung des Maschinenrahmens zuvor um die größte Wegstrecke ausgefahren worden ist. Folglich ist der Abstand zwischen Fräswalze und Boden maximal oder zumindest größer als ein vorgegebener Mindestabstand. Bei dieser Steuerung wird die Baumaschine zur Vergrößerung der Bodenfreiheit in der waagerechten Ausrichtung weiter angehoben. Es ist aber auch möglich, die Baumaschine erst zur Vergrößerung der Bodenfreiheit anzuheben und dann erst auszurichten. Dem Schritt der waagerechten Ausrichtung des Maschinerahmens kann auch ein Schritt des Anhebens des Maschinerahmens um eine vorgegebene Wegstrecke vorausgehen, um die Arbeitswalze zunächst nur ein kurzes Stück anzuheben und dann die Baumaschine auszurichten und daraufhin die Bodenfreiheit zu vergrößern.

Wenn die Baumaschine die erforderliche Bodenfreiheit hat, kann die Baumaschine umgesetzt werden. Bei ausreichender Bodenfreiheit kann der Maschinenführer zum Umsetzen der Baumaschine die Laufwerke einschalten. Während des Umsetzens wird die Neigung des Maschinenrahmens quer zur Arbeitsrichtung laufend überwacht. Wenn eine Neigung des Maschinenrahmens festgestellt wird, beispielsweise weil eines der Laufwerke eine Fräskante überfährt, wird die Ausrichtung des Maschinerahmens durch Ein- bzw. Ausfahren der betreffenden Hubeinrichtung korrigiert. Vorzugsweise erfolgt die Korrektur durch Ausfahren der betreffenden mindestens einen Hubeinrichtung, die auf der in Arbeitsrichtung linken Seite angeordnet ist oder der betreffenden mindestens einen Hubeinrichtung, die auf der in Arbeitsrichtung rechten Seite der Baumaschine angeordnet ist. Dies ist aber nur dann möglich, wenn die betreffende Hubeinrichtung noch nicht die vorgegebene Hubstellung eingenommen hat, d. h. sich noch nicht in der oberen Endposition befindet.

Wenn die betreffende linke oder rechte Hubeinrichtung bei einer Neigung der Baumaschine quer zur Arbeitsrichtung nicht die vorgegebene Hubstellung einnimmt, wird die Hubeinrichtung solange ausgefahren, bis der Maschinenrahmen in Querrichtung im Wesentlichen waagrecht ausgerichtet ist. Dadurch kann sich die Bodenfreiheit nicht verringern. Die Hubeirichtung wird aber nur solange ausgefahren, soweit die vorgegebene Hubstellung noch nicht erreicht ist. Wenn die betreffende Hubeinrichtung die vorgegebene Hubstellung eingenommen hat, wird die entsprechend gegenüberliegende Hubeinrichtung solange eingefahren, bis der Maschinenrahmen in Querrichtung waagrecht ausgerichtet ist.

Für den Fall, dass mindestens eine Hubeinrichtung eingefahren wird, wodurch sich die Bodenfreiheit verringert, stellt eine bevorzugte Ausführungsform sicher, dass die Arbeitswalze nicht auf den Boden auftrifft. Bei dieser Ausführungsform weist die Steuereinheit eine Abstands-Messeinrichtung zur Erfassung des Abstandes zwischen der Arbeitswalze und der Bodenoberfläche auf. Die Steuereinheit ist weiterhin derart konfiguriert, dass während des Umsetzens der Baumaschine bei einer Neigung der Baumaschine quer zur Arbeitsrichtung, wenn die linke bzw. rechte Hubeinrichtung die vorgegebene Hubstellung einnimmt, d. h. die Endposition bereits erreicht hat, die entsprechend gegenüberliegende Hubeinrichtung nur dann oder nur solange eingefahren wird, wenn der Abstand zwischen der Arbeitswalze und der Bodenoberfläche einen vorgegebenen Mindestabstand nicht unterschreitet. In diesem Fall wird der Maschinenrahmen zwar nicht horizontal ausgerichtet, eine mögliche Beschädigung der Arbeitseinrichtung wird aber verhindert.

Die Abstands-Messeinrichtung zur Erfassung des Abstandes zwischen Arbeitswalze und Boden kann unterschiedlich ausgebildet sein. Der Abstand zwischen der Unterkante der Fräswalze und der Bodenoberfläche kann beispielsweise mit einem oder mehreren Abstandssensoren direkt gemessen werden, die taktile oder berührungslose Sensoren sein können, beispielsweise Infrarot- oder Ultraschall-Abstandssensoren. Der Abstand kann aber auch indirekt über die Bestimmung der Position von Teilen der Baumaschine erfasst werden, die beweglich am Maschinerahmen befestigt sind und auf dem Boden aufliegen. Beispielsweise kann aus der gegenüber dem Maschinerahmen gemessenen Höhe des seitlichen Kantenschutzes und/oder des in Arbeitsrichtung vor der Arbeitswalze angeordneten Niederhalters und/oder des hinter der Arbeitswalze angeordneten Abstreifers der Baumaschine die Höhe der am Maschinerahmen angeordneten Arbeitswalze gegenüber dem Boden berechnet werden. Derartige Systeme sind beispielsweise aus der WO 2008/077963 A1 bekannt. Dies hat den Vorteil, dass die erfindungsgemäße Steuerung von bereits in der Baumaschine vorhandenen Komponenten Gebrauch machen kann. Besonders bevorzugt kann aus der bekannten Hubstellung der Hubeinrichtungen sowie der bekannten Position der Fräswalze am Maschinenrahmen der Abstand der Fräswalze zur Bodenoberfläche ermittelt werden.

Im Folgenden wird ein Ausführungsbeispiel der Erfindung unter Bezugnahme auf die Zeichnungen im Einzelnen erläutert.

Es zeigen:
- Fig. 1: ein erstes Ausführungsbeispiel einer selbstfahrenden Baumaschine in der Seitenansicht,
- Fig. 2: ein zweites Ausführungsbeispiel einer selbstfahrenden Baumaschine in der Seitenansicht,
- Fig. 3: der Maschinenrahmen der Baumaschine von Fig. 2 zusammen mit den Hubeinrichtungen und den Laufwerken in vereinfachter schematischer Darstellung,
- Fig. 4: ein Blockschaltbild der Steuereinheit der Baumaschine,
- Fig. 5A: eine Ansicht einer Hubeinrichtung eines Laufwerks zusammen mit der Arbeitswalze in vereinfachter schematischer Darstellung vor dem Ausrichten des Maschinenrahmens,
- Fig. 5B: eine Ansicht einer Hubeinrichtung eines Laufwerks zusammen mit der Arbeitswalze nach dem Ausrichten des Maschinenrahmens und
- Fig. 5C: eine Ansicht einer Hubeinrichtung eines Laufwerks zusammen mit der Arbeitswalze, wobei der Maschinenrahmen zur Vergrößerung der Bodenfreiheit angehoben ist.

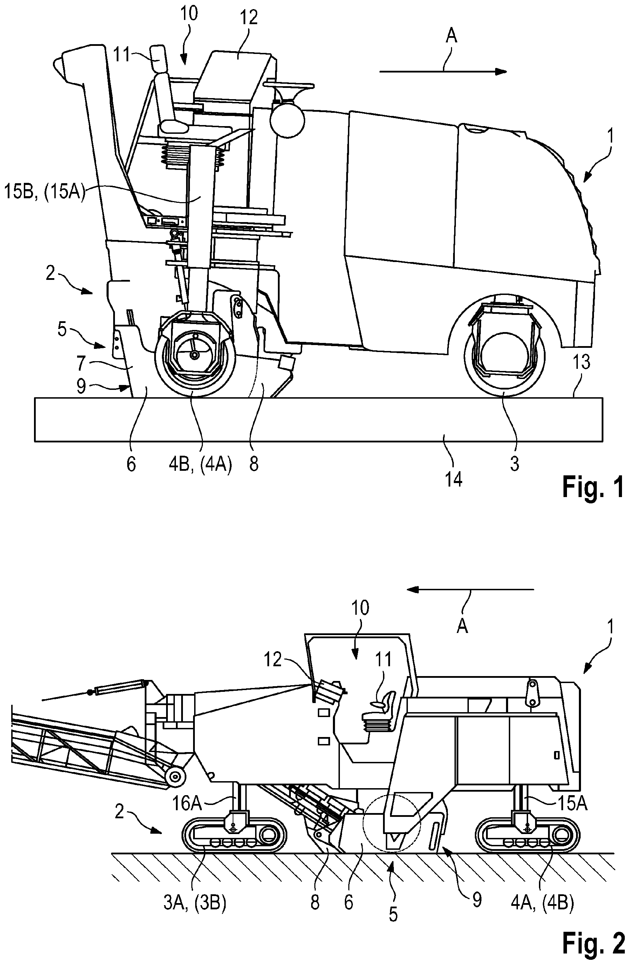

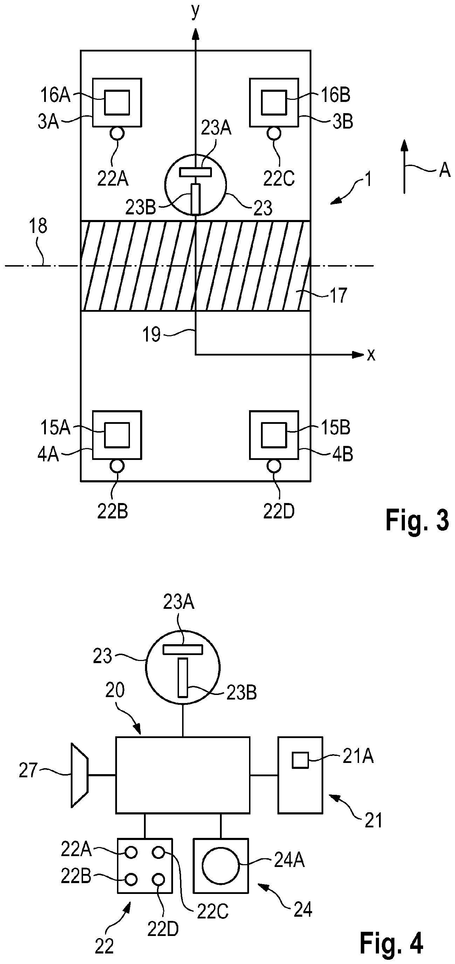

Fig. 1 zeigt in der Seitenansicht ein erstes Ausführungsbeispiel einer Straßenfräsmaschine, bei der es sich um eine Kleinfräse handelt. Die Straßenfräsmaschine weist einen Maschinenrahmen 1 auf, der von einem Fahrwerk 2 getragen wird. Das Fahrwerk 2 weist ein in Arbeitsrichtung A vorderes Rad 3 und zwei hintere Räder 4A, 4B auf (Fig. 3).

Die Fräsmaschine verfügt über eine Arbeitseinrichtung 5, die an dem Maschinenrahmen 1 angeordnet ist. Die Arbeitseinrichtung 5 weist eine Arbeitswalze auf, bei der es sich um eine Fräswalze handelt. Die in Fig. 1 nicht erkennbare Fräswalze 17 ist in einem Fräswalzengehäuse 6 angeordnet. An der in Arbeitsrichtung A linken und rechten Seite ist das Fräswalzengehäuse 6 von einem Kantenschutz 7 verschlossen. An der in Arbeitsrichtung A vorderen Seite ist das Fräswalzengehäuse 6 von einem Niederhalter 8 und an der hinteren Seite von einem Abstreifer 9 verschlossen, die in der Ansicht von Fig. 1 von dem Kantenschutz 7 verdeckt werden. Oberhalb des Fräswalzengehäuses 6 befindet sich der Fahrstand 10 mit dem Fahrersitz 11 und dem Bedienpult 12.

Der Maschinenrahmen 1 der Baumaschine ist gegenüber der Oberfläche 13 des Bodens 14 in der Höhe verstellbar. Die Einrichtung zur Höhenverstellung des Maschinenrahmens weist eine in Arbeitsrichtung A linke hintere Hubeinrichtung 15A und rechte hintere Hubeinrichtung 15B auf, die den Maschinenrahmen tragen. Die linke Hubeinrichtung 15A ist an dem linken Laufwerk 4A und die rechte Hubeinrichtung 15B ist an dem rechten Laufwerk 4B befestigt. Wenn die Laufwerke auf dem Boden 14 aufstehen, kann der Maschinenrahmen 1 durch Einfahren und Ausfahren der Hubeinrichtungen abgesenkt und angehoben werden. Da die Arbeitseinrichtung 5 an dem Maschinenrahmen 1 angeordnet ist, kann mit der Höhenverstellung des Maschinenrahmens die Höhe der Arbeitswalze über der Geländeoberfläche und im Fräsbetrieb die Frästiefe eingestellt werden. Mit der Höhenverstellung des Maschinenrahmens 1 verstellt sich auch die Position des auf dem Boden schwimmend aufliegenden Kantenschutzes 7, des Niederhalters 8 und des Abstreifers 9 relativ zum Maschinenrahmen 1, die beweglich am Maschinenrahmen 1 angeordnet sind. Dem vorderen Laufwerk 3 kann auch eine Hubeinrichtung zugeordnet sein. Anstelle eines vorderen Laufwerks können auch zwei vordere Laufwerke vorgesehen sein, die pendelnd gelagert sind und einen gemeinsamen Aufstandspunkt bilden.

Fig. 2 zeigt ein zweites Ausführungsbeispiel einer Straßenfräsmaschine, bei der es sich um eine Großfräse handelt. Die Großfräse weist in Arbeitsrichtung A ein vorderes linkes Laufwerk 3A und ein vorderes rechtes Laufwerk 3B und ein hinteres linkes Laufwerk 4A und ein hinteres rechtes Laufwerk 4B und eine in Arbeitsrichtung A vordere, linke und rechte Hubeinrichtung 16A, 16B und eine hintere, rechte und linke Hubeinrichtung 15A, 15B auf, so dass eine Ausrichtung des Maschinenrahmens sowohl mit den beiden vorderen als auch den beiden hinteren Hubeinrichtungen möglich ist (Fig. 3). Die Teile der Großfräse, die den Teilen der Kleinfräse von Fig. 1 entsprechen, sind in Fig. 2 mit den gleichen Bezugszeichen versehen.

Fig. 3 zeigt in vereinfachter schematischer Darstellung den Maschinenrahmen 1 der Baumaschine von Fig. 2 mit den vorderen und hinteren Laufwerken sowie der den Laufwerken zugeordneten Hubeinrichtungen. Zwischen den vorderen und hinteren Laufwerken ist am Maschinenrahmen 1 die Arbeitswalze 17 der Arbeitseinrichtung 5 angeordnet. Während des Fräsvorgangs stehen die vorderen Laufwerke 3A, 3B auf dem noch nicht gefrästen Boden vor der Fräswalze auf, während die hinteren Laufwerke 4A, 4B auf dem gefrästen Boden, d. h. in der Frässpur, aufstehen. In Fig. 3 ist eine Bezugsebene des Maschinerahmens bezeichnet, die in der X/Y-Ebene des kartesischen Koordinatensystems 19 liegt. Die Arbeitswalze 17 rotiert um eine Drehachse 18, die parallel zu der X-Achse des Koordinatensystems 19 verläuft.

Die Hubeinrichtungen sind bei dem Ausführungsbeispiel Kolben-/Zylinder-Anordnungen, die hydraulisch betätigt werden. Zur Ansteuerung der Hubeinrichtungen weist die Baumaschine eine Steuereinheit 20 auf, die eine Datenverarbeitungseinheit umfassen kann, auf der ein Datenverarbeitungsprogramm (Software) läuft. Die Steuerung sieht einen ersten Betriebsmodus zum Bearbeiten des Bodens und einen zweiten Betriebsmodus zum Umsetzen der Baumaschine vor. Der Maschinenführer kann durch Betätigung eines Betätigungsorgans 21A auf einer Eingabeeinheit 21, beispielsweise durch Betätigung eines Tasters oder Schalters auf dem Bedienpult 12 am Fahrerstand 10, den einen oder anderen Betriebsmodus auswählen (Fig. 4).

In dem ersten Betriebsmodus steuert die Steuereinheit 20 die Hubeinrichtungen 15, 16 derart an, dass sich der Maschinenrahmen 1 in einer in Bezug auf die Bodenoberfläche abgesenkten Position befindet, in der die Arbeitswalze 17 mit dem Boden in Eingriff ist. In dieser Position erfolgt die Ansteuerung der Hubeinrichtungen zur Einstellung der gewünschten Frästiefe. Der erste Betriebsmodus stellt den eigentlichen Fräsbetrieb dar. In dem zweiten Betriebsmodus soll sich der Maschinenrahmen 1 in einer in Bezug auf die Bodenoberfläche angehobenen Position befinden, so dass die Arbeitswalze 17 nicht mit dem Boden in Eingriff ist. Dieser Betriebsmodus ist nur für das Umsetzen der Baumaschine bestimmt.

Die Steuereinheit 20 weist eine Hubstellung-Messeinrichtung 22 zur Erfassung der Hubstellung der Hubeinrichtungen 15, 16, eine Neigungs-Erfassungseinrichtung 23 und eine Abstands-Messeinrichtung 24 zur Erfassung des Abstandes zwischen der Arbeitswalze 17 und der Bodenoberfläche 13 auf.

Die Hubstellung-Messeinrichtung 22 weist den einzelnen Hubeinrichtungen 15, 16 zugeordnete Sensoren 22A bis 22D, beispielsweise Seilzugsensoren auf, mit denen die Hubstellung der einzelnen Hubsäulen erfasst wird. Die Hubstellung-Messeinrichtung 22 kann für jede Hubeinrichtung auch nur einen Sensor aufweisen, der eine definierte Hubstellung, insbesondere eine Endstellung der einzelnen Hubeinrichtungen detektiert, d. h. ob die Hubeinrichtungen vollständig oder nahezu vollständig aus- bzw. eingefahren sind. Die Abstands-Messeinrichtung 24 zur Erfassung des Abstandes zwischen Arbeitswalze 17 und Bodenoberfläche 14 kann beispielsweise einen oder mehrere Infrarot- oder Ultraschall-Abstandssensoren 24A aufweisen. Der Abstand kann aber auch durch die Erfassung der Position des Kantenschutzes 7 und/oder Niederhalters 8 und/oder Abstreifers 9 der Baumaschine ermittelt werden.

Die Neigungs-Erfassungseinrichtung 23 weist einen Neigungssensor 23A auf, der derart ausgebildet ist, dass die Neigung des Maschinenrahmens 1 quer zur Arbeitsrichtung A der Baumaschine erfasst wird, d. h. eine Kippbewegung um die Y-Achse oder eine zu der Y-Achse parallele Achse. Die Neigungs-Erfassungseinrichtung 23 kann auch einen weiteren Neigungssensor 23B aufweisen, der derart ausgebildet ist, dass die Neigung des Maschinenrahmens in Längsrichtung der Baumaschine erfasst wird, d. h. eine Kippbewegung um die X-Achse oder eine zu der X-Achse parallele Achse.

Die Steuereinheit 20 wertet die Messwerte (Daten oder Signale) der Hubstellung-Messeinrichtung 22 und die Messwerte der Neigungs-Erfassungseinrichtung 23 und der Abstands-Messeinrichtung 24 sowie Daten(Signale) der Eingabeeinheit 21 aus und erzeugt Daten (Signale) zur Ansteuerung einer nicht dargestellten Hydraulikeinheit der Baumaschine, mit der die Kolben-/Zylinder-Anordnungen, betätigt werden. Die Steuereinheit 20 ist derart konfiguriert, dass die nachfolgend beschriebenen Verfahrensschritte ausgeführt werden.

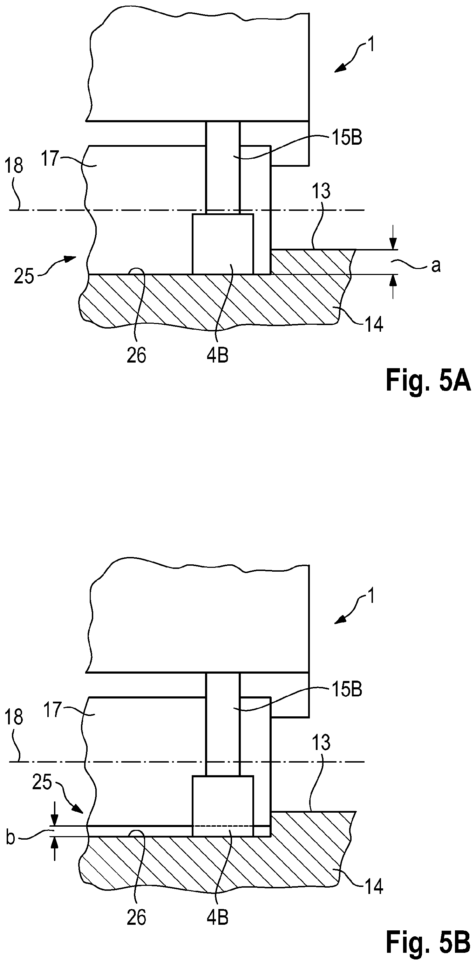

Bei dem nachfolgend beschriebenen Ausführungsbeispiel wird die Neigung des Maschinenrahmens 1 nur in Querrichtung ausgeglichen. Zunächst wird angenommen, dass sich die Baumaschine noch in dem ersten Betriebsmodus befindet. Dieser Fall ist in Fig. 5A dargestellt, die einen Teil des Maschinenrahmens 1 der Baumaschine, die an dem Maschinenrahmen angeordnet Arbeitswalze 17 sowie ein Laufwerk 4B der Baumaschine zusammen mit der Hubeinrichtung 15B zeigt. Die Fräswalze 17 ist mit dem Boden 14 im Eingriff, wobei die vorderen Laufwerke auf dem ungefrästen und die hinteren Laufwerke auf dem Grund 26 der Frässpur 25 aufstehen, die eine Frästiefe a hat. Nach dem Fräsen der Frässpur 25 soll die Baumaschine umgesetzt werden, um eine neue Frässpur parallel zu der alten Frässpur zu fräsen. Hierzu kann die Maschine beispielsweise schräg rückwärts verfahren werden, um an den Anfang der parallel liegenden zweiten Frässpur zu gelangen. Hierbei überfahren die einzelnen Laufwerke 3, 4 die sprunghaften Übergänge zwischen den gefrästen und ungefrästen Geländeabschnitten.

Wenn der Maschinenführer den zweiten Betriebsmodus vorgibt, überprüft die Steuereinheit 20 zunächst, ob der Maschinenrahmen 1 in Querrichtung waagerecht ausgerichtet ist. Dies ist bereits der Fall, wenn der Maschinenrahmen 1 in dem ersten Betriebsmodus waagerecht ausgerichtet worden ist (Fig. 5A). Die Baumaschine kann aber auch gegenüber der Horizontalen schräg gestellt sein. In diesem Fall steuert die Steuereinheit 20 die betreffende Hubeinrichtung oder die betreffenden Hubeinrichtungen derart an, dass der Maschinenrahmen quer zur Arbeitsrichtung A waagrecht ausgerichtet wird. Wenn der Maschinenrahmen 1 beispielsweise nach rechts geneigt ist, werden die rechten vorderen und hinteren Hubeinrichtungen 16B, 15B solange ausgefahren, bis die Neigungs-Erfassungseinrichtung 23 feststellt, dass der Maschinenrahmen 1 in Querrichtung waagerecht ausgerichtet ist. Da die Hubeinrichtungen ausgefahren werden, vergrößert sich der Abstand b zwischen der Unterkante der Arbeitswalze 17 und dem Fräsgrund 26 insbesondere auf der rechten Seite. Fig. 5B zeigt die Hubstellung der Hubeinrichtung 15B sowie die Fräswalze 17 in der leicht angehobenen Position, wobei der Maschinenrahmen 1 waagerecht ausgerichtet ist.

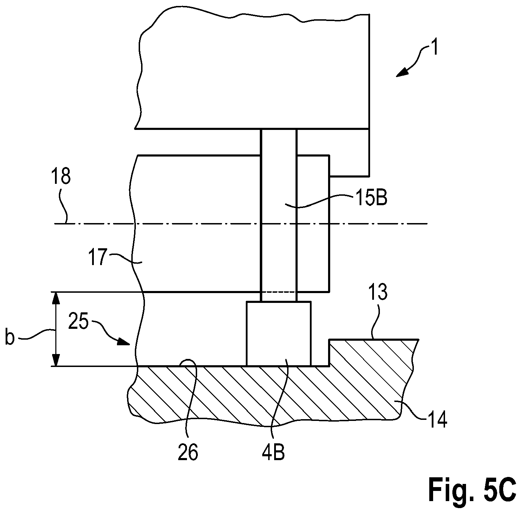

Nach der waagerechten Ausrichtung des Maschinerahmens 1 steuert die Steuereinheit 20 die Hubeinrichtungen 15, 16 derart an, dass sämtliche Hubeinrichtungen ausgefahren werden. Während des Ausfahrens der Hubeinrichtungen 15, 16 überwacht die Steuereinheit 20 die Hubstellungen der Hubeinrichtungen. Die Steuereinheit 20 vergleicht die Hubstellung sämtlicher Hubeinrichtungen 15, 16 mit einer vorgegeben Hubstellung, die einer oberen Endposition entspricht. Die obere Endposition ist vorzugsweise eine Hubstellung, in der die betreffende Hubeinrichtung vollständig oder nahezu vollständig ausgefahren ist. Wenn eine der Hubeinrichtungen die Hubstellung eingenommen hat, die der vorgegeben Hubstellung entspricht, stoppt die Steuereinheit den Ausfahrvorgang für sämtliche Hubeinrichtungen. Die Maschine ist dann waagerecht ausgerichtet, wobei sich die Arbeitswalze 17 in einem sicheren Abstand b zum Fräsgrund 26 befindet, so dass die Baumaschine umgesetzt werden kann, ohne dass die Gefahr der Beschädigung der Arbeitswalze besteht (Fig.5C).

Während des Umsetzens empfängt die Steuereinheit 20 laufend die Messwerte (Daten, Signale) der Neigungserfassungs-Einrichtung 23, wobei die Steuereinheit laufend die Neigung der Baumaschine in Querrichtung überprüft (Schritt 1). Wenn die Baumaschine beispielsweise schräg rückwärts nach links fährt, überfährt zunächst das hintere linke Laufwerk 4A den sprunghaften Übergang zwischen dem gefrästen und ungefrästen Abschnitt, wodurch die Baumaschine nach rechts zu Kippen beginnt. Bei einer vorgegebenen Abweichung von der Horizontalen ermittelt die Steuereinheit 20 zunächst, welche Hubeinrichtungen 15, 16 zur Herstellung einer waagerechten Ausrichtung ausgefahren werden müssen. Im vorliegenden Fall müssen die vorderen linken und rechten Hubeinrichtungen 16A, 15A und die rechte hintere Hubeinrichtung 15B ausgefahren werden. Daraufhin überprüft die Steuereinheit 20, ob von den betreffenden Hubeinrichtungen, die ausgefahren werden müssen, sich bereits eine Hubeinrichtung in der vorgegebenen Endposition befindet (Schritt 2). Wenn dies nicht der Fall ist, werden die betreffenden Hubeinrichtungen ausgefahren (Schritt 3). Ansonsten kann die betreffende Hubeinrichtung nicht weiter ausgefahren werden. In diesem Fall kann die Baumaschine nur durch Einfahren einer oder mehrerer Hubeinrichtungen ausgerichtet werden. Die Steuereinrichtung ermittelt, welche Hubeinrichtung 15, 16 zur Herstellung einer waagerechten Ausrichtung eingefahren werden müssen. Im vorliegenden Fall muss die linke hintere Hubeinrichtung 15A eingefahren werden, da das Laufwerk 4A auf dem ungefrästen Boden aufsteht. Bevor die betreffende oder die betreffenden Hubeinrichtungen eingefahren werden, überprüft die Steuereinheit 20, die die Messwerte der Abstands-Messeinrichtung 24 zur Messung des Abstandes b zwischen der Unterkante der Arbeitswalze 17 und der Bodenoberfläche 14 empfängt, ob der gemessene Abstand b nicht einen vorgegebenen Mindestabstand unterschreitet, so dass die Gefahr besteht, dass die Arbeitswalze auf den Boden aufsetzt (Schritt 4). Bei Unterschreiten des Mindestabstandes wird die Baumaschine nicht ausgerichtet, um zu vermeiden, dass die Fräswalze mit dem Boden in Kontakt kommt. Die Steuereinheit 20 kann in diesem Fall ein Alarmsignal für eine Alarmeinheit 27 erzeugen, die am Fahrerstand 10 angeordnet sein kann, um dem Maschinenführer über diesen Betriebszustand mit einem akustischen und/oder optischen Alarm aufmerksam zu machen. Wenn der Abstand b aber größer als der Mindestabstand ist, wird die betreffende Hubeinrichtung 15, 16 oder werden die betreffenden Hubeinrichtungen solange eingefahren, bis der Maschinenrahmen 1 in Querrichtung waagerecht ausgerichtet ist (Schritt 5). Wenn Abstand b ausreichend ist, wird hier die linke hintere Hubeinrichtung 4A eingefahren.

Wenn nur die linke hintere Hubeinrichtung 4A eingefahren wird, erfolgt eine waagerechte Ausrichtung des Maschinenrahmens sowohl in Quer- als auch Längsrichtung. Es ist aber auch möglich, die linke, vordere und hintere Hubeinrichtung gemeinsam einzufahren, so dass eine waagerechte Ausrichtung nur in Querrichtung erfolgt.

Während des Einfahrens bzw. des Ausfahrens der einzelnen Hubeinrichtungen 15, 16 überwacht die Steuereinheit 20 laufend die Reaktion der Baumaschine auf die Bewegung der Hubeinrichtungen 15, 16. Die Steuereinheit 20 überprüft, ob sich die Neigung der Maschine beim Einfahren oder Ausfahren der einzelnen Hubeinrichtungen ändert (Schritt 6). Wenn eine Änderung der Neigung nicht festgestellt wird, schließt die Steuereinheit 20 auf einen instabilen Zustand (Schritt 6). Die Überprüfung der Neigung des Maschinenrahmens kann auch eine Plausibilitätsprüfung dahingehend umfassen, dass überprüft wird, ob beim Ausfahren der rechten Laufwerke eine Kippbewegung nach links oder beim Ausfahren der linken Laufwerke eine Kippbewegung nach rechts erfolgt. Die Plausibilitätsprüfung kann beim Einfahren der betreffenden Laufwerke in analoger Weise erfolgen.

Einen instabilen Zustand kann die Steuereinheit 20 bei einer Baumaschine mit zwei vorderen und hinteren, linken und rechten Laufwerken oder Rädern beispielsweise auch dann annehmen, wenn die Baumaschine mit nur drei Laufwerken oder Rädern auf dem Boden aufsteht, d. h. ein Laufwerk den Bodenkontakt verloren hat, so dass die Baumaschine auf eine Seite kippen kann. In diesem Fall wird ein weiteres Einfahren der betreffenden Hubeinrichtung nicht zu einer Änderung der Neigung des Maschinerahmens führen, was von der Steuereinheit erkannt wird. Die Steuereinheit 20 bricht dann die automatische Steuerung ab (Schritt 7). Auch in diesem Fall kann die Steuereinheit 20 ein Alarmsignal für die Alarmeinheit 27 erzeugen.

Bei einer Baumaschine mit nur einem vorderen Rad 3, das am Maschinenrahmen 1 mittig angeordnet ist, beispielsweise bei der in Fig. 1 gezeigten Kleinfräse, werden zur waagerechten Ausrichtung des Maschinenrahmens 1 in Querrichtung nur die den hinteren Laufwerken 4A, 4B oder Rädern zugeordneten Hubeinrichtungen 16A, 16B aus- bzw. eingefahren. Die Kleinfräse kann aber auch zwei vordere Räder aufweisen, die mit einer pendelnden Lagerung nur einen Aufstandspunkt bilden. Auch bei derartigen Baumaschinen werden für die waagerechte Ausrichtung des Maschinenrahmens nur die hinteren Hubeinrichtungen aus- bzw. eingefahren.

Wenn die Neigungs-Erfassungseinrichtung 23 derart ausgebildet ist, dass sowohl die Neigung in Quer- als auch Längsrichtung des Maschinenrahmens 1 erfasst wird, kann der Maschinenrahmen nicht nur in Quer-, sondern auch in Längsrichtung ausgerichtet werden.

Eine alternative Ausführungsform der Erfindung sieht vor, dass die Steuereinheit 20 die betreffenden Hubeinrichtungen 15, 16 ermittelt, mit denen einer Neigung des Maschinenrahmens durch Ausfahren oder Einfahren derselben entgegengewirkt werden kann, und diese derart ansteuert, dass der Maschinenrahmen in Quer- und Längsrichtung waagerecht ausgerichtet wird, wobei die Bodenfreiheit maximal ist oder einen Mindestabstand nicht unterschreitet. Die Ansteuerung der betreffenden Hubeinrichtungen 15, 16 für die Ausrichtung in Längsrichtung erfolgt in analoger Weise wie die Ansteuerung der betreffenden Hubeinrichtungen für die Ausrichtung in Querrichtung. Hierzu kann insbesondere vorgesehen sein, dass zunächst die waagerechte Ausrichtung des Maschinenrahmens in Querrichtung und anschließend die waagerechte Ausrichtung in Längsrichtung erfolgt.

## Patentansprüche

1. Selbstfahrende Baumaschine mit
einem Maschinenrahmen (1), der von einem Fahrwerk (2) getragen wird, das vordere und hintere Laufwerke (3, 4) aufweist,
mindestens einer am Maschinenrahmen (1) angeordneten Arbeitseinrichtung (5), die eine Arbeitswalze (17) zur Bearbeitung des Bodens aufweist,
den einzelnen Laufwerken (3, 4) zugeordneten Hubeinrichtungen (15, 16), die zum Anheben bzw. Absenken der Laufwerke gegenüber dem Maschinenrahmen (1) jeweils ein- bzw. ausfahrbar sind, so dass der Maschinenrahmen gegenüber der Bodenoberfläche abgesenkt bzw. angehoben wird,
einer Steuereinheit (20) zum Ansteuern der Hubeinrichtungen (15, 16), die eine Hubstellung-Messeinrichtung (22) zur Erfassung der Hubstellung der Hubeinrichtungen und eine Neigungs-Erfassungseinrichtung (23) aufweist, die derart ausgebildet ist, dass die Neigung des Maschinenrahmens quer zur Arbeitsrichtung (A) der Baumaschine erfasst wird,
wobei die Steuereinheit (20) einen ersten Betriebsmodus zum Bearbeiten des Bodens und einen zweiten Betriebsmodus zum Umsetzen der Baumaschine vorsieht, wobei sich der Maschinenrahmen (1) in dem ersten Betriebsmodus in einer in Bezug auf die Bodenoberfläche abgesenkten Position befindet, in der die Arbeitswalze (17) mit dem Boden in Eingriff ist, und sich der Maschinenrahmen (1) in dem zweiten Betriebsmodus in einer in Bezug auf die Bodenoberfläche angehobenen Position befindet, in der die Arbeitswalze (17) nicht mit dem Boden in Eingriff ist,
**dadurch gekennzeichnet, dass**
die Steuereinheit (20) in dem zweiten Betriebsmodus derart konfiguriert ist, dass die den einzelnen Laufwerken (3, 4) zugeordneten Hubeinrichtungen (15, 16) derart angesteuert werden, dass der Maschinenrahmen (1) in Abhängigkeit von der erfassten Neigung des Maschinenrahmens (1) quer zur Arbeitsrichtung (A) der Baumaschine und der erfassten Hubstellung der Hubeinrichtungen (15, 16) im Wesentlichen waagerecht ausgerichtet wird.

2. Selbstfahrende Baumaschine nach Anspruch 1, **dadurch gekennzeichnet, dass** die Steuereinheit (20) in dem zweiten Betriebsmodus derart konfiguriert ist, dass die den einzelnen Laufwerken (3, 4) zugeordneten Hubeinrichtungen (15, 16) derart angesteuert werden, dass mindestens eine Hubeinrichtung eine vorgegebene Hubstellung einnimmt, in der die Hubeinrichtung um eine vorgegebene Wegstrecke ausgefahren ist.

3. Selbstfahrende Baumaschine nach Anspruch 2, **dadurch gekennzeichnet, dass** die vorgegebene Hubstellung der mindestens einen Hubeinrichtung (15, 16) eine Hubstellung ist, in der die Hubeinrichtung vollständig ausgefahren ist.

4. Selbstfahrende Baumaschine nach einem der Ansprüche 1 bis 3, **dadurch gekennzeichnet, dass** die Neigungs-Erfassungseinrichtung (23) mindestens einen am Maschinenrahmen (1) angeordneten Neigungssensor (23A, 23B) aufweist.

5. Selbstfahrende Baumaschine nach einem der Ansprüche 1 bis 4, **dadurch gekennzeichnet, dass** die Baumaschine in Arbeitsrichtung (A) ein vorderes linkes Laufwerk (3A) und ein vorderes rechtes Laufwerk (3B) und ein hinteres linkes Laufwerk (4A) und ein hinteres rechtes Laufwerk (4B) und eine in Arbeitsrichtung (A) vordere linke und rechte Hubeinrichtung (16A, 16B) und eine hintere rechte und linke Hubeinrichtung (15A, 15B) aufweist oder die Baumaschine in Arbeitsrichtung (A) ein vorderes Laufwerk (3) und ein hinteres linkes Laufwerk (4A) und ein rechtes hinteres Laufwerk (4B und eine in Arbeitsrichtung (A) hintere linke und rechte Hubeinrichtung (16A, 16B) aufweist.

6. Selbstfahrende Baumaschine nach einem der Ansprüche 2 bis 5, **dadurch gekennzeichnet, dass** die Steuereinheit (20) derart konfiguriert ist, dass nach dem Umschalten von dem ersten Betriebsmodus in den zweiten Betriebsmodus und vor dem Umsetzen der Baumaschine überprüft wird, ob der Maschinenrahmen (1) quer zur Arbeitsrichtung (A) geneigt ist, wobei bei einer Querneigung des Maschinenrahmens (1) mindestens eine Hubeinrichtung (15A, 16A), die auf der in Arbeitsrichtung linken Seite angeordnet ist oder mindestens eine Hubeinrichtung (15B, 16B), die auf der in Arbeitsrichtung rechten Seite der Baumaschine angeordnet ist, ausgefahren wird, bis der Maschinenrahmen (1) quer zur Arbeitsrichtung (A) im Wesentlichen waagrecht ausgerichtet ist.

7. Selbstfahrende Baumaschine nach Anspruch 6, **dadurch gekennzeichnet, dass** nach dem Ausfahren der mindestens einen Hubeinrichtung (15A, 16A) auf der linken Seite oder der mindestens einen Hubeinrichtung (15B, 16B) auf der rechten Seite sämtliche Hubeinrichtungen (15, 16) ausgefahren werden, bis eine der Hubeinrichtungen die vorgegebene Hubstellung einnimmt.

8. Selbstfahrende Baumaschine nach einem der Ansprüche 2 bis 7, **dadurch gekennzeichnet, dass** die Steuereinheit (20) derart konfiguriert ist, dass während des Umsetzens der Baumaschine bei einer Neigung des Maschinenrahmens (1) quer zur Arbeitsrichtung (A)
mindestens eine Hubeinrichtung (15A, 16A), die auf der in Arbeitsrichtung linken Seite angeordnet ist, oder mindestens eine Hubeinrichtung (15B, 16B), die auf der in Arbeitsrichtung rechten Seite der Baumaschine angeordnet ist, ausgefahren wird, bis der Maschinenrahmen quer zur Arbeitsrichtung (A) im Wesentlichen waagrecht ausgerichtet ist, wenn die linke bzw. rechte Hubeinrichtung nicht die vorgegebene Hubstellung einnimmt, oder
mindestens eine Hubeinrichtung (15A, 16A), die auf der in Arbeitsrichtung linken Seite angeordnet ist, oder mindestens eine Hubeinrichtung (15B, 16B), die auf der in Arbeitsrichtung rechten Seite der Baumaschine angeordnet ist, eingefahren wird, bis der Maschinenrahmen (1) quer zur Arbeitsrichtung (A) waagrecht ausgerichtet ist, wenn die linke bzw. rechte Hubeinrichtung die vorgegebene Hubstellung einnimmt.

9. Selbstfahrende Baumaschine nach Anspruch 8, **dadurch gekennzeichnet, dass** die Steuereinheit (20) eine Abstands-Messeinrichtung (24) zur Erfassung des Abstandes zwischen der Arbeitswalze (17) und der Bodenoberfläche aufweist, wobei die Steuereinheit (20) derart konfiguriert ist, dass während des Umsetzens der Baumaschine bei einer Neigung des Maschinenrahmens (1) quer zur Arbeitsrichtung (A), wenn die linke bzw. rechte Hubeinrichtung (15, 16) die vorgegebene Hubstellung einnimmt, die Hubeinrichtung nur dann eingefahren wird, wenn der Abstand (b) zwischen der Arbeitswalze (17) und der Bodenoberfläche (26) einen vorgegebenen Mindestabstand nicht unterschreitet.

10. Selbstfahrende Baumaschine nach einem der Ansprüche 1 bis 9, **dadurch gekennzeichnet, dass** die Neigungs-Erfassungseinrichtung (23) derart ausgebildet ist, dass die Neigung des Maschinenrahmens (1) quer zur Arbeitsrichtung (A) und in Arbeitsrichtung der Baumaschine erfasst wird,
wobei die Steuereinheit (20) in dem zweiten Betriebsmodus derart konfiguriert ist, dass die den einzelnen Laufwerken (3, 4) zugeordneten Hubeinrichtungen (15, 16) derart angesteuert werden, dass der Maschinenrahmen (1) in Abhängigkeit von der erfassten Neigung des Maschinenrahmens (1) quer zur Arbeitsrichtung (A) und in Arbeitsrichtung der Baumaschine und der erfassten Hubstellung der Hubeinrichtungen (15, 16) im Wesentlichen waagerecht ausgerichtet wird.

11. Verfahren zum Betreiben einer selbstfahrende Baumaschine, die aufweist:
einem Maschinenrahmen (1), der von einem Fahrwerk (2) getragen wird, das vordere und hintere Laufwerke aufweist,
mindestens einer am Maschinenrahmen (1) angeordneten Arbeitseinrichtung (5),
die eine Arbeitswalze (17) zur Bearbeitung des Bodens aufweist,
den einzelnen Laufwerken (3, 4) zugeordneten Hubeinrichtungen (15, 16), die zum Anheben bzw. Absenken der Laufwerke gegenüber dem Maschinenrahmen jeweils ein- bzw. ausfahrbar sind, so dass der Maschinenrahmen gegenüber der Bodenoberfläche abgesenkt bzw. angehoben wird,
wobei ein erster Betriebsmodus zum Bearbeiten des Bodens und ein zweiter Betriebsmodus zum Umsetzen der Baumaschine vorgesehen wird, wobei sich der Maschinenrahmen in dem ersten Betriebsmodus in einer in Bezug auf die Bodenoberfläche abgesenkten Position befindet, in der die Arbeitswalze mit dem Boden in Eingriff ist, und sich der Maschinenrahmen in dem zweiten Betriebsmodus in einer in Bezug auf die Bodenoberfläche angehobenen Position befindet, in der die Arbeitswalze nicht mit dem Boden in Eingriff ist,
**dadurch gekennzeichnet, dass**
in dem zweiten Betriebsmodus die den einzelnen Laufwerken zugeordneten Hubeinrichtungen von einer Steuereinheit derart angesteuert werden, dass der Maschinenrahmen in Abhängigkeit von der erfassten Neigung des Maschinenrahmens quer zur Arbeitsrichtung der Baumaschine und der erfassten Hubstellung der Hubeinrichtungen im Wesentlichen waagerecht ausgerichtet wird.

12. Verfahren nach Anspruch 11, **dadurch gekennzeichnet, dass** in dem zweiten Betriebsmodus die den einzelnen Laufwerken zugeordneten Hubeinrichtungen derart verfahren werden, dass mindestens eine Hubeinrichtung eine vorgegebene Hubstellung einnimmt, in der die Hubeinrichtung um eine vorgegebene Wegstrecke ausgefahren ist.

13. Verfahren nach Anspruch 12, **dadurch gekennzeichnet, dass** die vorgegebene Hubstellung der mindestens einen Hubeinrichtung eine Hubstellung ist, in der die Hubeinrichtung vollständig ausgefahren ist.

14. Verfahren nach einem der Ansprüche 11 bis 13, **dadurch gekennzeichnet, dass** nach dem Umschalten von dem ersten Betriebsmodus in den zweiten Betriebsmodus und vor dem Umsetzen der Baumaschine überprüft wird, ob der Maschinenrahmen quer zur Arbeitsrichtung geneigt ist, wobei bei einer Querneigung des Maschinenrahmens mindestens eine Hubeinrichtung, die auf der in Arbeitsrichtung linken Seite angeordnet ist oder mindestens eine Hubeinrichtung, die auf der in Arbeitsrichtung rechten Seite der Baumaschine angeordnet ist, ausgefahren wird, bis der Maschinenrahmen quer zur Arbeitsrichtung im Wesentlichen waagrecht ausgerichtet ist.

15. Verfahren nach Anspruch 14, **dadurch gekennzeichnet, dass** nach dem Ausfahren der mindestens einen Hubeinrichtung auf der linken Seite oder der mindestens einen Hubeinrichtung auf der rechten Seite der Baumaschine sämtliche Hubeinrichtungen ausgefahren werden, bis eine der Hubeinrichtungen die vorgegebene Hubstellung einnimmt.

16. Verfahren nach einem der Ansprüche 11 bis 15, **dadurch gekennzeichnet, dass** während des Umsetzens der Baumaschine bei einer Neigung des Maschinerahmens quer zur Arbeitsrichtung
mindestens eine Hubeinrichtung, die auf der in Arbeitsrichtung linken Seite angeordnet ist oder mindestens eine Hubeinrichtung, die auf der in Arbeitsrichtung rechten Seite der Baumaschine angeordnet ist, ausgefahren wird, bis der Maschinenrahmen quer zur Arbeitsrichtung im Wesentlichen waagrecht ausgerichtet ist, wenn die linke bzw. rechte Hubeinrichtung nicht die vorgegebene Hubstellung einnimmt, und
mindestens eine Hubeinrichtung, die auf der in Arbeitsrichtung linken Seite angeordnet ist oder mindestens eine Hubeinrichtung, die auf der in Arbeitsrichtung rechten Seite angeordnet ist, eingefahren wird, bis der Maschinenrahmen quer zur Arbeitsrichtung waagrecht ausgerichtet ist, wenn die linke bzw. rechte Hubeinrichtung die vorgegebene Hubstellung einnimmt.

17. Verfahren nach Anspruch 16, **dadurch gekennzeichnet, dass** der Abstand zwischen der Arbeitswalze und der Bodenoberfläche gemessen wird und während des Umsetzens der Baumaschine bei einer Neigung des Maschinenrahmens quer zur Arbeitsrichtung, wenn die linke bzw. rechte Hubeinrichtung die vorgegebene Hubstellung einnimmt, die Hubeinrichtung nur dann eingefahren wird, wenn der Abstand zwischen der Arbeitswalze und der Bodenoberfläche einen vorgegebenen Mindestabstand nicht unterschreitet.

18. Verfahren nach einem der Ansprüche 11 bis 17, **dadurch gekennzeichnet, dass** in dem zweiten Betriebsmodus die den einzelnen Laufwerken zugeordneten Hubeinrichtungen derart verfahren werden, dass der Maschinenrahmen in Abhängigkeit von der erfassten Neigung des Maschinenrahmens quer zur Arbeitsrichtung und in Arbeitsrichtung der Baumaschine und der erfassten Hubstellung der Hubeinrichtungen im Wesentlichen waagerecht ausgerichtet wird.

## Claims

1. Self-propelled construction machine comprising
a machine frame (1) supported by a chassis (2) which comprises front and rear running gears (3, 4),
at least one working device (5) that is arranged on the machine frame (1) and comprises a working roller (17) for working the ground,
lifting devices (15, 16) that are associated with the individual running gears (3, 4) and can each be retracted or extended for raising or lowering the running gears with respect to the machine frame (1) so that the machine frame is lowered or raised with respect to the ground surface,
a control unit (20) for actuating the lifting devices (15, 16), which unit comprises a lifting position measuring device (22) for detecting the lifting position of the lifting devices and a tilt detection device (23) designed such that the tilt of the machine frame is detected transversely to the working direction (A) of the construction machine,
the control unit (20) providing a first mode of operation for working the ground and a second mode of operation for moving the construction machine, the machine frame (1) being in a lowered position with respect to the ground surface when in the first mode of operation, in which position the working roller (17) is engaged with the ground, and the machine frame (1) being in a raised position with respect to the ground surface when in the second mode of operation, in which position the working roller (17) is not engaged with the ground,
**characterised in that**,
in the second mode of operation, the control unit (20) is configured such that the lifting devices (15, 16) associated with the individual running gears (3, 4) are actuated in such a way that the machine frame (1) is substantially levelled according to both the detected tilt of the machine frame (1) transversely to the working direction (A) of the construction machine and the detected lifting position of the lifting devices (15, 16).

2. Self-propelled construction machine according to claim 1, **characterised in that**, in the second mode of operation, the control unit (20) is configured such that the lifting devices (15, 16) associated with the individual running gears (3, 4) are actuated in such a way that at least one lifting device assumes a predefined lifting position in which the lifting device is extended by a predefined distance.

3. Self-propelled construction machine according to claim 2, **characterised in that** the predefined lifting position of the at least one lifting device (15, 16) is a lifting position in which the lifting device is completely extended.

4. Self-propelled construction machine according to any of claims 1 to 3, **characterised in that** the tilt detection device (23) comprises at least one tilt sensor (23A, 23B) arranged on the machine frame (1).

5. Self-propelled construction machine according to any of claims 1 to 4, **characterised in that**, in the working direction (A), the construction machine comprises a front left running gear (3A) and a front right running gear (3B) and a rear left running gear (4A) and a rear right running gear (4B), and a front left and a front right lifting device (15A, 15B) in the working direction (A), or the construction machine comprises, in the working direction (A), a front running gear (3) and a rear left running gear (4A) and a right rear running gear (4B) and a rear left and a rear right lifting device (16A, 16B) in the working direction (A).

6. Self-propelled construction machine according to any of claims 2 to 5, **characterised in that** the control unit (20) is configured such that, following switching from the first mode of operation to the second mode of operation and before the construction machine is moved, a check is carried out as to whether the machine frame (1) is tilted transversely to the working direction (A), at least one lifting device (15A, 16A) arranged on the left-hand side in the working direction or at least one lifting device (15B, 16B) arranged on the right-hand side of the construction machine being extended, if the machine frame (1) is tilted transversely, until the machine frame (1) is substantially levelled transversely to the working direction (A).

7. Self-propelled construction machine according to claim 6, **characterised in that**, after the at least one lifting device (15A, 16A) on the left-hand side or the at least one lifting device (15B, 16B) on the right-hand side are extended, all the lifting devices (15, 16) are extended until one of the lifting devices assumes the predefined lifting position.

8. Self-propelled construction machine according to any of claims 2 to 7, **characterised in that** the control unit (20) is configured such that, while the construction machine is being moved, in the event that the machine frame (1) is tilted transversely to the working direction (A),
at least one lifting device (15A, 16A) arranged on the left-hand side in the working direction or at least one lifting device (15B, 16B) arranged on the right-hand side of the construction machine in the working direction is extended until the machine frame is substantially levelled transversely to the working direction (A), if the left-hand or right-hand lifting device does not assume the predefined lifting position, or
at least one lifting device (15A, 16A) arranged on the left-hand side in the working direction or at least one lifting device (15B, 16B) arranged on the right-hand side of the construction machine in the working direction is retracted until the machine frame (1) is substantially levelled transversely to the working direction (A), if the left-hand or right-hand lifting device assumes the predefined lifting position.

9. Self-propelled construction machine according to claim 8, **characterised in that** the control unit (20) comprises a distance measuring device (24) for detecting the distance between the working roller (17) and the ground surface, the control unit (20) being configured such that, while the construction machine is being moved, if the machine frame (1) is tilted transversely to the working direction (A) and if the left-hand or right-hand lifting device (15, 16) assumes the predefined lifting position, the lifting device is only retracted if the distance (b) between the working roller (17) and the ground surface (26) does not fall below a predefined minimum distance.

10. Self-propelled construction machine according to any of claims 1 to 9, **characterised in that** the tilt detection device (23) is configured such that the tilt of the machine frame (1) is detected transversely to the working direction (A) and in the working direction of the construction machine,
the control unit (20) being configured in the second mode of operation such that the lifting devices (15, 16) associated with the individual running gears (3, 4) are actuated in such a way that the machine frame (1) is substantially levelled according to the detected tilt of the machine frame (1) transversely to the working direction (A) and in the working direction of the construction machine, and to the detected lifting position of the lifting devices (15, 16).

11. Method for operating a self-propelled construction machine that comprises:
a machine frame (1) supported by a chassis (2) which comprises front and rear running gears,
at least one working device (5) that is arranged on the machine frame (1) and comprises a working roller (17) for working the ground,
lifting devices (15, 16) that are associated with the individual running gears (3, 4) and can each be retracted or extended for raising or lowering the running gears with respect to the machine frame so that the machine frame is lowered or raised with respect to the ground surface,
a first mode of operation being provided for working the ground and a second mode of operation being provided for moving the construction machine, the machine frame being in a lowered position with respect to the ground surface when in the first mode of operation, in which position the working roller is engaged with the ground, and the machine frame being in a raised position with respect to the ground surface when in the second mode of operation, in which position the working roller is not engaged with the ground,
**characterised in that**,
in the second mode of operation, the lifting devices associated with the individual running gears are actuated by a control unit in such a way that the machine frame is substantially levelled according to both the detected tilt of the machine frame transversely to the working direction of the construction machine and the detected lifting position of the lifting devices.

12. Method according to claim 11, **characterised in that**, in the second mode of operation, the lifting devices associated with the individual running gears are moved such that at least one lifting device assumes a predefined lifting position in which the lifting device is extended by a predefined distance.

13. Method according to claim 12, **characterised in that** the predefined lifting position of the at least one lifting device is a lifting position in which the lifting device is completely extended.

14. Method according to any of claims 11 to 13, **characterised in that**, following switching from the first mode of operation to the second mode of operation and before the construction machine is moved, a check is carried out as to whether the machine frame is tilted transversely to the working direction, at least one lifting device arranged on the left-hand side in the working direction or at least one lifting device arranged on the right-hand side of the construction machine in the working direction being extended, if the machine frame is tilted transversely, until the machine frame is substantially levelled transversely to the machine frame.

15. Method according to claim 14, **characterised in that**, after the at least one lifting device on the left-hand side or the at least one lifting device on the right-hand side of the construction machine has been extended, all the lifting devices are extended until one of the lifting devices assumes the predefined lifting position.

16. Method according to any of claims 11 to 15, **characterised in that**, while the construction machine is being moved, in the event that the machine frame is tilted transversely to the working direction,
at least one lifting device arranged on the left-hand side in the working direction or at least one lifting device arranged on the right-hand side of the construction machine in the working direction is extended until the machine frame is substantially levelled transversely to the working direction, if the left-hand or right-hand lifting device does not assume the predefined lifting position, and
at least one lifting device arranged on the left-hand side in the working direction or at least one lifting device arranged on the right-hand side in the working direction is retracted until the machine frame is substantially levelled transversely to the working direction, if the left-hand or right-hand lifting device assumes the predefined lifting position.

17. Method according to claim 16, **characterised in that** the distance between the working roller and the ground surface is measured and, while the construction machine is being moved, if the machine is tilted transversely to the working direction and if the left-hand or right-hand lifting device assumes the predefined lifting position, the lifting device is only retracted if the distance between the working roller and the ground surface does not fall below a predefined minimum distance.

18. Method according to any of claims 11 to 17, **characterised in that**, in the second mode of operation, the lifting devices associated with the individual running gears are moved such that the machine frame is substantially levelled according to the detected tilt of the machine frame transversely to the working direction and in the working direction of the construction machine, and to the detected lifting position of the lifting devices.

## Revendications

1. Engin de construction automoteur avec
un bâti de machine (1) qui est porté par un mécanisme de roulement (2) qui présente des trains de roues (3, 4) avant et arrière,
au moins un dispositif de travail (5) agencé sur le bâti de machine (1) qui présente un rouleau de travail (17) pour le traitement du sol,
des dispositifs de levage (15, 16) associés aux trains de roues (3, 4) individuels qui sont rentrables ou sortables respectivement pour le levage ou l'abaissement des trains de roues par rapport au bâti de machine (1) de sorte que le bâti de machine soit abaissé ou levé par rapport à la surface de sol,
une unité de commande (20) pour la commande des dispositifs de levage (15, 16) qui présente un dispositif de mesure de position de levage (22) pour la détection de la position de levage des dispositifs de levage et un dispositif de détection d'inclinaison (23) qui est réalisé de telle manière que l'inclinaison du bâti de machine soit détectée transversalement au sens de travail (A) de l'engin de construction,
dans lequel l'unité de commande (20) prévoit un premier mode de fonctionnement pour le traitement du sol et un second mode de fonctionnement pour le déplacement de l'engin de construction, dans lequel le bâti de machine (1) se trouve dans le premier mode de fonctionnement dans une position abaissée par rapport à la surface de sol, dans laquelle le rouleau de travail (17) est en prise avec le sol, et le bâti de machine (1) se trouve dans le second mode de fonctionnement dans une position relevée par rapport à la surface de sol, dans laquelle le rouleau de travail (17) n'est pas en prise avec le sol,
**caractérisé en ce que**
l'unité de commande (20) est configurée dans le second mode de fonctionnement de telle manière que les dispositifs de levage (15, 16) associés aux trains de roues (3,4) individuels soient commandés de sorte que le bâti de machine (1) soit orienté sensiblement horizontalement en fonction de l'inclinaison détectée du bâti de machine (1) transversalement au sens de travail (A) de l'engin de construction et de la position de levage détectée des dispositifs de levage (15, 16).

2. Engin de construction automoteur selon la revendication 1, **caractérisé en ce que** l'unité de commande (20) est configurée dans le second mode de fonctionnement de telle manière que les dispositifs de levage (15, 16) associés aux trains de roues (3, 4) individuels soient commandés de sorte qu'au moins un dispositif de levage occupe une position de levage prescrite dans laquelle le dispositif de levage est sorti d'une distance prescrite.

3. Engin de construction automoteur selon la revendication 2, **caractérisé en ce que** la position de levage prescrite d'au moins un dispositif de levage (15, 16) est une position de levage dans laquelle le dispositif de levage est complètement sorti.

4. Engin de construction automoteur selon l'une des revendications 1 à 3, **caractérisé en ce que** le dispositif de détection d'inclinaison (23) présente au moins un capteur d'inclinaison (23A, 23B) agencé sur le bâti de machine (1).

5. Engin de construction automoteur selon l'une des revendications 1 à 4, **caractérisé en ce que** l'engin de construction dans le sens de travail (A) présente un train de roues (3A) gauche avant et un train de roues (3B) droit avant et un train de roues (4A) gauche arrière et un train de roues (4B) droit arrière et un dispositif de levage (16A, 16B) gauche et droit avant dans le sens de travail (A) et un dispositif de levage (15A, 15B) gauche et droit arrière ou l'engin de construction dans le sens de travail (A) présente un train de roues (3) avant et un train de roues (4A) gauche arrière et un train de roues (4B) arrière droit et un dispositif de levage (16A, 16B) gauche et droit arrière dans le sens de travail (A).

6. Engin de construction automoteur selon l'une des revendications 2 à 5, **caractérisé en ce que** l'unité de commande (20) est configurée de telle manière qu'après la commutation du premier mode de fonctionnement au second mode de fonctionnement et avant le déplacement de l'engin de construction il soit vérifié si le bâti de machine (1) est incliné transversalement au sens de travail (A), dans lequel en cas d'inclinaison transversale du bâti de machine (1) au moins un dispositif de levage (15A, 16A) qui est agencé sur le côté gauche dans le sens de travail ou au moins un dispositif de levage (15B, 16B) qui est agencé sur le côté droit dans le sens de travail de l'engin de construction, est sorti jusqu'à ce que le cadre de machine (1) soit orienté sensiblement horizontalement transversalement au sens de travail (A).

7. Engin de construction automoteur selon la revendication 6, **caractérisé en ce qu'**après la sortie d'au moins un dispositif de levage (15A, 16A) sur le côté gauche ou l'au moins un dispositif de levage (15B, 16B) sur le côté droit tous les dispositifs de levage (15, 16) sont sortis jusqu'à ce qu'un des dispositifs de levage occupe la position de levage prescrite.

8. Engin de construction automoteur selon l'une des revendications 2 à 7, **caractérisé en ce que** l'unité de commande (20) est configurée de telle manière que pendant le déplacement de l'engin de construction en cas d'inclinaison du bâti de machine (1) transversalement au sens de travail (A)
au moins un dispositif de levage (15A, 16A) qui est agencé sur le côté gauche dans le sens de travail, ou au moins un dispositif de levage (15B, 16B) qui est agencé sur le côté droit dans le sens de travail de l'engin de construction, soit sorti jusqu'à ce que le bâti de machine soit orienté sensiblement horizontalement transversalement au sens de travail (A), lorsque le dispositif de levage gauche ou droit n'occupe pas la position de levage prescrite, ou
au moins un dispositif de levage (15A, 16A) qui est agencé sur le côté gauche dans le sens de travail, ou au moins un dispositif de levage (15B, 16B) qui est agencé sur le côté droit dans le sens de travail de l'engin de construction, soit rentré jusqu'à ce que le bâti de machine (1) soit orienté horizontalement transversalement au sens de travail (A) lorsque le dispositif de levage gauche ou droit occupe la position de levage prescrite.

9. Engin de construction automoteur selon la revendication 8, **caractérisé en ce que** l'unité de commande (20) présente un dispositif de mesure de distance (24) pour la détection de la distance entre le rouleau de travail (17) et la surface de sol, dans lequel l'unité de commande (20) est configurée de telle manière que pendant le déplacement de l'engin de construction en cas d'inclinaison du bâti de machine (1) transversalement au sens de travail (A) lorsque le dispositif de levage (15, 16) gauche ou droit occupe la position de levage prescrite, le dispositif de levage soit seulement rentré lorsque la distance (b) entre le rouleau de travail (17) et la surface de sol (26) n'est pas inférieure à une distance minimale prescrite.

10. Engin de construction automoteur selon l'une des revendications 1 à 9, **caractérisé en ce que** le dispositif de détection d'inclinaison (23) est réalisé de telle manière que l'inclinaison du bâti de machine (1) soit détectée transversalement au sens de travail (A) et dans le sens de travail de l'engin de construction,
dans lequel l'unité de commande (20) est configurée dans le second mode de fonctionnement de telle manière que les dispositifs de levage (15, 16) associés aux trains de roues (3, 4) individuels soient commandés de sorte que le bâti de machine (1) soit orienté sensiblement horizontalement en fonction de l'inclinaison détectée du bâti de machine (1) transversalement au sens de travail (A) et dans le sens de travail de l'engin de construction et de la position de levage détectée des dispositifs de levage (15, 16).

11. Procédé de fonctionnement d'un engin de construction automoteur qui présente :
un bâti de machine (1) qui est porté par un mécanisme de roulement (2) qui présente des trains de roues avant et arrière,
au moins un dispositif de travail (5) agencé sur le bâti de machine (1) qui présente un rouleau de travail (17) pour le traitement du sol,
des dispositifs de levage (15, 16) associés aux trains de roues individuels (3, 4) qui sont rentrables ou sortables respectivement pour le levage ou l'abaissement des trains de roues par rapport au bâti de machine de sorte que le bâti de machine soit abaissé ou levé par rapport à la surface de sol,
dans lequel un premier mode de fonctionnement pour le traitement du sol et un second mode de fonctionnement pour le déplacement de l'engin de construction sont prévus, dans lequel le bâti de machine se trouve dans le premier mode de fonctionnement dans une position abaissée par rapport à la surface de sol, dans laquelle le rouleau de travail est en prise avec le sol, et le bâti de machine se trouve dans le second mode de fonctionnement dans une position relevée par rapport à la surface de sol, dans laquelle le rouleau de travail n'est pas en prise avec le sol,
**caractérisé en ce que**
dans le second mode de fonctionnement les dispositifs de levage associés aux trains de roues individuels sont commandés par une unité de commande de telle manière que le bâti de machine soit orienté sensiblement horizontalement en fonction de l'inclinaison détectée du bâti de machine transversalement au sens de travail de l'engin de construction et de la position de levage détectée des dispositifs de levage.

12. Procédé selon la revendication 11, **caractérisé en ce que** dans le second mode de fonctionnement les dispositifs de levage associés aux trains de roues individuels sont déplacés de telle manière qu'au moins un dispositif de levage occupe une position de levage prescrite dans laquelle le dispositif de levage est sorti d'une distance prescrite.

13. Procédé selon la revendication 12, **caractérisé en ce que** la position de levage prescrite d'au moins un dispositif de levage est une position de levage dans laquelle le dispositif de levage est complètement sorti.

14. Procédé selon l'une des revendications 11 à 13, **caractérisé en ce qu'**après la commutation du premier mode de fonctionnement au second mode de fonctionnement et avant le déplacement de l'engin de construction il est vérifié si le bâti de machine est incliné transversalement au sens de travail, dans lequel en cas d'inclinaison transversale du bâti de machine au moins un dispositif de levage qui est agencé sur le côté gauche dans le sens de travail ou au moins un dispositif de levage qui est agencé sur le côté droit dans le sens de travail de l'engin de construction, est sorti jusqu'à ce que le bâti de machine soit orienté sensiblement horizontalement transversalement au sens de travail.

15. Procédé selon la revendication 14, **caractérisé en ce qu'**après la sortie d'au moins un dispositif de levage sur le côté gauche ou l'au moins un dispositif de levage sur le côté droit de l'engin de machine tous les dispositifs de levage sont sortis jusqu'à ce qu'un des dispositifs de levage occupe la position de levage prescrite.

16. Procédé selon l'une des revendications 11 à 15, **caractérisé en ce que** pendant le déplacement de l'engin de construction en cas d'inclinaison du bâti de machine transversalement au sens de travail
au moins un dispositif de levage qui est agencé sur le côté gauche dans le sens de travail ou au moins un dispositif de levage qui est agencé sur le côté droit dans le sens de travail de l'engin de construction, est sorti jusqu'à ce que le bâti de machine soit orienté sensiblement horizontalement transversalement au sens de travail lorsque le dispositif de levage gauche ou droit n'occupe pas la position de levage prescrite, et
au moins un dispositif de levage qui est agencé sur le côté gauche dans le sens de travail ou au moins un dispositif de levage qui est agencé sur le côté droit dans le sens de travail, est rentré jusqu'à ce que le bâti de machine soit orienté horizontalement transversalement au sens de travail lorsque le dispositif de levage gauche ou droit occupe la position de levage prescrite.

17. Procédé selon la revendication 16, **caractérisé en ce que** la distance entre le rouleau de travail et la surface de sol est mesurée et pendant le déplacement de l'engin de construction en cas d'inclinaison du bâti de machine transversalement au sens de travail lorsque le dispositif de levage gauche ou droit occupe la position de levage prescrite, le dispositif de levage est rentré seulement si la distance entre le rouleau de travail et la surface de sol n'est pas inférieure à une distance minimale prescrite.

18. Procédé selon l'une des revendications 11 à 17, **caractérisé en ce que** dans le second mode de fonctionnement les dispositifs de levage associés aux trains de roues individuels sont déplacés de telle manière que le bâti de machine soit orienté sensiblement horizontalement en fonction de l'inclinaison détectée du bâti de machine transversalement au sens de travail et dans le sens de travail de l'engin de construction et de la position de levage détectée des dispositifs de levage.
